# EUROPÄISCHE PATENTSCHRIFT

(11) **EP 1 754 403 B1**
(45) Veröffentlichungstag und Bekanntmachung des Hinweises auf die Patenterteilung: **25.03.2009**
(21) Anmeldenummer: 06016051.2
(22) Anmeldetag: 02.08.2006
(51) Int. Cl.: A01B 33/08

(54) **Kreiselegge**
Rotary harrow
Herse rotative

(30) Priorität: 18.08.2005 DE 102005039027
(43) Veröffentlichungstag der Anmeldung: 21.02.2007
(73) Patentinhaber: Amazonen-Werke H. Dreyer GmbH & Co. KG, 49205 Hasbergen (DE)
(72) Erfinder: Tiessen, Reimer Uwe, 26135 Oldenburg (DE); Pokriefke, Michael, 27798 Hude (DE); Gieseke, Reinhard, 27798 Hude (DE)

(56) Entgegenhaltungen:
- FR-A- 2 528 268
- FR-A1- 2 322 520
- GB-A- 2 136 261
- US-A- 4 003 439

## Beschreibung

Die Erfindung betrifft eine Kreiselegge gemäß des Oberbegriffes des Patentanspruches 1 (vgl. US-A-4 003 439).

Eine derartige Kreiselegge ist beispielsweise in der EP 1 295 520 A2 beschrieben. Bei dieser Kreiselegge ragt das Ritzel des Hauptgetriebes in die Getriebewanne hinein und steht mit der Außenverzahnung eines Stirnrades des die Kreisel antreibenden Stirnradgetriebes in Antriebsverbindung. Die Antriebswelle des Hauptgetriebes, welche das Ritzel trägt, ist in dem Gehäuse des Hauptgetriebes gelagert. Um das Ritzel mit der Außenverzahnung des Hauptgetriebes kämmen zu lassen, muss das Getriebegehäuse eine ausreichende Breite aufweisen, damit das Ritzel mit der Außenverzahnung des Hauptgetriebes kämmen kann.

Der Erfindung liegt die Aufgabe zugrunde, einen Antrieb des Stirnradantriebs einer Kreiselegge über das in die Getriebewanne hineinragende Ritzel zu schaffen, welches nicht mit der Außenverzahnung eines Stirnrades kämmt.

Diese Aufgabe wird erfindungsgemäß durch die kennzeichnenden Merkmale des Anspruches 1 gelöst.

Infolge dieser Maßnahme kann das Ritzel des Hauptgetriebes innerhalb des Umlaufkreises des Stirnrades in die Innenverzahnung des dem Stirnrad zugeordneten Antriebselementes eingreifen.

Hierbei ist auf einem der Zahnräder ein Antriebsring angeordnet, der die Innverzahnung aufweist.

Hierbei kann der die Innenverzahnung aufweisende Antriebsring einstückig mit dem Stirnrad ausgebildet sein. Hierdurch gibt sich eine preiswerte und kostengünstige Fertigung.

Auch ist es möglich, dass der Antriebsring mittels Befestigungs- und/oder Kuppelelementen mit dem Stirnrad verbunden ist. Dieses hat den Vorteil, dass das Stirnrad mit der Außenverzahnung unabhängig von dem Stirnrad mit der Innenverzahnung ausgetauscht werden kann, nachdem die Befestigungs- und Kuppelelemente gelöst worden sind.

Weitere Einzelheiten der Erfindung sind der Beispielsbeschreibung und den Zeichnungen zu entnehmen. Hierbei zeigen
- Fig. 1: einen Schnitt durch das Hauptgetriebe und die Getriebewanne einer Kreiselegge in schematischer Darstellung, wobei das die Innenverzahnung aufweisenden Zahnrad einstückig mit dem die Außenverzahnung aufweisenden Stirnrad ausgebildet ist und
- Fig. 2: einen Schnitt durch das Hauptgetriebe und die Getriebewanne einer Kreiselegge in schematischer Darstellung, wobei das die Innenverzahnung aufweisenden Zahnrad mittels Befestigungs- und Kuppelelement mit dem die Außenverzahnung aufweisenden Stirnrad verbunden ist.

Die Kreiselegge weist eine quer zur Fahrtrichtung lang gestreckte Getriebewanne 1 auf, in der in bekannter und nicht näher dargestellter Weise in Abständen zueinander Werkzeugkreisel 2 gegensinnig rotierend angetrieben sind, auf. Die Werkzeugkreisel 2 tragen Werkzeuge 3. Die Werkzeugkreisel 2 werden über in der Getriebewanne 1 angeordnete und ineinander greifende Stirnräder 4, die eine Außenverzahnung aufweisen, des Stirnradgetriebes 5 gegensinnig rotierend angetrieben. Die Rotorwellen 6 der Werkzeugkreisel 2 sind mittels Lager 7, die in der Getriebewanne 1 eingeschweißte Lagerhülsen angeordnet sind, gelagert.

Um die Stirnräder 4 der Kreiselegge anzutreiben, ist auf der Oberseite der Getriebewanne 1 das einen Winkeltrieb aufweisende Hauptgetriebe 8 angeordnet. Über die Antriebswelle 9, die mittels einer nicht dargestellten Gelenkwelle an einen die Kreiselegge ziehenden Schlepper angeschlossen ist, wird über den Kegelradtrieb 9 die senkrechte Abtriebswelle 10 angetrieben. Am unteren Ende der Abtriebswelle 10 ist das Ritzel 11 angeordnet. Dieses Ritzel 11 steht in Antriebsverbindung mit einem auf einem der Stirnräder 4 zugeordneten Antriebsring 12, der eine Innenverzahnung 13 aufweist, in Antriebsverbindung. Somit können über das Hauptgetriebe 8 das Stirnradgetriebe 5 die Werkzeugkreisel 2 angetrieben werden. Der Antriebsring 12 ist einstückig mit dem Stirnrad 4 ausgebildet.

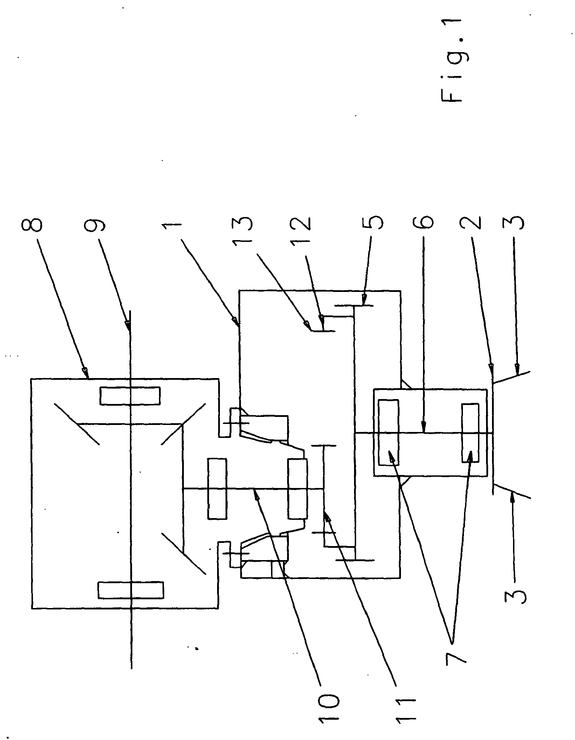

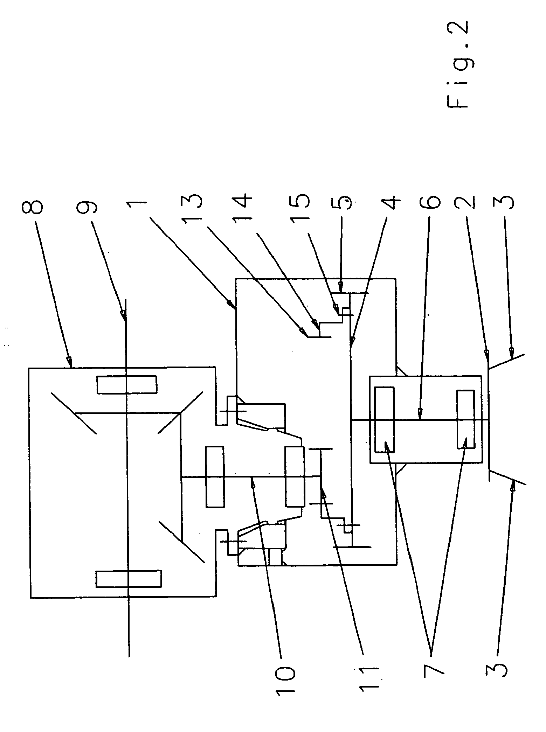

Die Ausgestaltung gemäß Fig. 2 unterscheidet sich von der Kreiselegge gemäß Fig. 1 dadurch, dass der Antriebsring 14, der die Innenverzahnung 13 aufweist, nicht einstückig mit dem die Außenverzahnung aufweisenden Stirnrad 4 verbunden ist, sondern der die Innenverzahnung 13 aufweisende Außenring 14 ist mittels dem Befestigungs- und Kuppelelementen 15 mit dem die Außenverzahnung aufweisenden Stirnrad 4 verbunden.

## Patentansprüche

1. Kreiselegge mit Getriebewanne (1) mit mehreren Stirnrädern, die drehfest mit Rotorwellen (6) verbunden sind, die wiederum in der Getriebewanne (1) mittels Lager (7) gelagert sind, wobei die einzelnen Stirnräder (4) nebeneinander angeordnet sind und über ihre Außenverzahnung miteinander im Eingriff stehen, mit einem oberhalb der Getriebewanne (1) angeordneten Hauptgetriebe (8), welches eine vertikal angeordnete Antriebswelle (10) für den Antrieb der Stirnräder (4) in der Getriebewanne (1) aufweist, wobei die Antriebswelle (10) in die Getriebewanne (1) hineinragt und endseitig ein Ritzel (11) aufweist und eines der Stirnräder (4) antreibt, **dadurch gekennzeichnet, dass** eines der Stirnräder (4) zusätzlich zu der Außenverzahnung eine mit dem Ritzel (11) der Antriebswelle (10) im Eingriff stehende Innenverzahnung (13) aufweist, dass auf einem der Stirnräder (4) ein die Innenverzahnung (13) aufweisender Antriebsring (12,14) angeordnet ist.

2. Kreiselegge nach Anspruch 1, **dadurch gekennzeichnet, dass** der Antriebsring (12) einstückig mit dem Stirnrad (4) ausgebildet ist.

3. Kreiselegge nach Anspruch 2, **dadurch gekennzeichnet, dass** der Antriebsring (14) mittels Befestigungs- und/oder Kuppelelementen (15) mit dem Stirnrad (4) verbunden ist.

## Claims

1. Rotary harrow including gearbox well (1) with a plurality of spur gears, which are non rotatably connected to rotor shafts (6), which in their turn are mounted in the gearbox well (1) by means of bearings (7), wherein the individual spur gears (4) are disposed adjacent each other and intermesh by means of their external toothing, said rotary harrow including a main gear (18) that is positioned above the gearbox well (1), said main gear including a vertically positioned drive shaft (10) for driving the spur gears (4) in the gearbox well (1), wherein the drive shaft (10) extends into the gear case (1), has a pinion (11) at one end and drives one of the spur gears (4), **characterized in that,** in addition to the external toothing, one of the spur gears (4) has an internal toothing (13) that meshes with the pinion (11) of the drive shaft (10), that a drive ring (12, 14) that includes the internal toothing (13) is positioned on one of the spur gears (4).

2. Rotary harrow according to Claim 1, **characterized in that** the drive ring (12) is realized in one piece with the spur gear (4).

3. Rotary harrow according to Claim 2, **characterised in that** the drive ring (14) is connected to the spur gear (4) by means of securing and/or coupling elements (15).

## Revendications

1. Herse rotative comprenant :
- un carter (1) ayant plusieurs pignons droits solidaires en rotation des arbres de rotor (6), eux-mêmes montées dans le carter de transmission (1) à l'aide de paliers (7), les différents pignons droits (4) étant disposées côte-à-côte et en prise les uns avec les autres par leurs dentures extérieures,
- un entraînement principal (8) disposé au-dessus du carter (1), qui présente un arbre d'entraînement (10) vertical pour l'entraînement des pignons droits (4) dans le carter (1),
l'arbre d'entraînement (10) en saillie dans le carter (1) porte à son extrémité un pignon (11) et entraîne l'un des pignons droits (4),
**caractérisée en ce qu'**
un des pignons droits (4) présente outre sa denture extérieure, une denture intérieure (13) en prise avec le pignon (11) de l'arbre d'entraînement (10),
l'un des pignons (4), porte un anneau d'entraînement (12, 14) ayant une denture intérieure (13).

2. Herse rotative selon la revendication 1,
**caractérisée en ce que**
l'anneau d'entraînement (12) est réalisé d'une seule pièce avec le pignon droit (4).

3. Herse rotative selon la revendication 2,
**caractérisée en ce que**
l'anneau d'entraînement (14) est relié au pignon droit (4) au moyen d'éléments de fixation et/ou de couplage (15).
